# EUROPÄISCHE PATENTSCHRIFT

(11) **EP 3 275 028 B1**
(45) Veröffentlichungstag und Bekanntmachung des Hinweises auf die Patenterteilung: **09.10.2019**
(21) Anmeldenummer: 15760116.2
(22) Anmeldetag: 25.08.2015
(51) Int. Cl.: H01M 2/10, H01M 2/20

(54) **BATTERIEBLOCK, UND VERFAHREN ZUR HERSTELLUNG EINES BATTERIEBLOCKS**
BATTERY BLOCK, AND METHOD FOR PRODUCING A BATTERY BLOCK
BLOC-BATTERIE, ET PROCÉDÉ DE FABRICATION D'UN BLOC-BATTERIE

(30) Priorität: 27.03.2015 DE 102015104741
(43) Veröffentlichungstag der Anmeldung: 31.01.2018
(73) Patentinhaber: H-Tech AG, 9494 Schaan (LI)
(72) Erfinder: TSCHIGGFREI, Peter, A-6807 Tisis (AT); SKALA, Gerd, A-6820 Frastanz (AT)
(74) Vertreter: Ter Meer Steinmeister & Partner
(86) Internationale Anmeldenummer: PCT/EP2015/069421
(87) Internationale Veröffentlichungsnummer: WO 2016/155846

(56) Entgegenhaltungen:
- WO-A1-2013/137707
- WO-A2-2009/011539

## Beschreibung

Die vorliegende Erfindung bezieht sich auf einen Batterieblock, der wenigstens zwei Batteriepacks enthält und auf ein Verfahren zur Herstellung eines Batterieblocks.

Batterieblocks werden in vielen verschiedenen elektrisch betriebenen Geräten eingesetzt, insbesondere in Elektrofahrzeugen, in elektrisch angetriebenen Fahrrädern, in akkubetriebenen Werkzeugen, oder portablen Batteriekoffern. In diesen Batterieblocks werden meist mehrere Batteriepacks eingesetzt, wobei jedes Batteriepack mehrere Batteriezellen enthält. Häufig werden in derartigen Batteriepacks, aus denen die Batterieblocks zusammengesetzt sind, wiederaufladbare Batteriezellen insbesondere auf Lithiumbasis verwendet. Die Erfindung ist aber weder auf wiederaufladbare noch auf Lithiumbasierte Batteriezellen beschränkt und kann auf jegliche Art von Batteriezellen angewendet werden. Wiederaufladbare Batterien oder Akkumulatoren zeichnen sich dadurch aus, dass sie nach einem ersten Entladeprozess wieder erneut aufgeladen werden können. Dies erfordert jedoch eine entsprechende Überwachung des Lade- und Entladeprozesses, beispielsweise durch ein Batteriemanagementsystem.

Bei der Verwendung von mehreren Batteriezellen innerhalb eines Batteriepacks und der Kombination von mehreren Batteriepacks in einem Batterieblock ist es sehr wichtig, die elektrischen Verbindungen zwischen den einzelnen Batteriezellen und dem Batteriepack bzw. zwischen den einzelnen Batteriepacks zuverlässig auszubilden. Diese verschiedenen elektrischen Verbindungen müssen sowohl während des Betriebes des elektrischen Geräts, d.h. unter entsprechenden mechanischen, thermischen und elektrischen Belastungen aber auch über die gesamte Lebensdauer des elektrischen Geräts zuverlässig arbeiten. Beim Einsatz von mehreren Batteriepacks in einem Batterieblock, der somit mehrere hundert Batteriezellen aufweisen kann, treten beim Laden und Entladen sehr große Ströme auf, die bei der Verschaltung von mehreren Batteriepacks, insbesondere in den Anschlussbereichen, fließen. Wo große Ströme fließen, entsteht auch sehr viel Wärme, deren unkontrollierte Übertragung auf die Batteriezellen vermieden werden muss, da Batteriezellen, insbesondere auf Lithiumbasis bei unkontrollierter Wärmezufuhr ausgasen bzw. auch explodieren können.

Daher werden im Stand der Technik verschiedenste Technologien eingesetzt, um eine überhöhte Wärmeeinwirkung auf die Batteriezellen während der Montage des Batteriepacks als auch während des Lade- und Entladeprozesses zu vermeiden. Ein Ansatz, eine thermische Überbeanspruchung von Batteriepacks bzw. der Batteriezellen innerhalb eines Batteriepacks zu vermeiden, besteht darin, die räumliche Ausdehnung eines Batteriepacks großzügig zu gestalten, so dass ausreichend große Abstände zwischen den einzelnen Batteriezellen bestehen. Ähnlich verhält es sich bei der Verschaltung von mehreren Batteriepacks zu einem Batterieblock, bei dem zwischen den einzelnen Batteriepacks Kabel verwendet werden, um diese Batteriepacks miteinander zu verschalten. Gegen eine großzügigere räumliche Aufteilung mit viel Volumen spricht das ständige Bedürfnis, elektrische Geräte kleiner auszugestalten und beispielsweise in einem Elektrofahrzeug mehr Stauraum bzw. eine größere Fahrgastzelle bereitzustellen. Daher existieren viele Bestrebungen, die Verschaltung von Batteriezellen in Batteriepacks bzw. die Verschaltung von mehreren Batteriepacks zu Batterieblöcken möglichst zu komprimieren, so dass sehr viele Zellen in einem minimalen Volumen verbaut werden können. Ein weiterer Aspekt bei der Konstruktion von Batterieblocks, der sich aus wenigstens zwei Batteriepacks zusammensetzt, besteht darin, dass von den vielen Batteriezellen innerhalb eines Batteriepacks während der Betriebsdauer auch einzelne Batteriezellen aufgrund von Inhomogenitäten innerhalb der Zellen ausfallen können, wobei der Ausfall häufig durch einen niedrigen Innenwiderstand hervorgerufen wird und demzufolge ein erhöhter Stromfluss an den Anschlussstrukturen des Batteriepacks bzw. an den Anschlussbereichen des Batterieblocks hervorgerufen wird. Dieser erhöhte Stromfluss kann zu einer unkontrollierten Wärmeentwicklung in den einzelnen Batteriezellen als auch in den benachbarten Zellen führen, was auch zu einer Kettenreaktion führen kann, so dass ein ganzes Batteriepack unkontrollierbar ausgast bzw. explodiert. Um derartige Einflüsse zu vermeiden, ist es erforderlich, die Batteriepacks, die zu einem Batterieblock verschaltet werden, so zu konstruieren, dass sie einfach herstellbar sind und durch ihre entsprechende Konstruktion sowohl während des Betriebs einen zuverlässigen elektrischen Kontakt aufweisen, als auch den mechanischen und thermischen Belastungen standhalten können. Weiter sollte der Batterieblock mit den mehreren Batteriepacks eine raumoptimierte Anordnung ermöglichen, die das Fließen von sehr großen Strömen ermöglicht, ohne zu einer thermischen Überlastung der einzelnen Zellen zu führen.

WO 2013/137707 A1 bezieht sich auf eine Kombination von elektrischen Batteriepaketen ohne Schweißverbindungen. Zwei Batteriepakete sind durch Druckplatten fest miteinander verbunden. Die vorliegende Ausführungsform verwendet zwei getrennte plattierte Kupferbleche, die zwischen dem Batteriezellenhalter und der Silikongummi-Druckplatte eingebettet sind. Der erste Endabschnittblock von Batteriepacks, der von einer Enddruckplatte getragen wird, kann mit dem zweiten Endabschnitt der Blockbatteriepacks unter Verwendung eines modifizierten Kupferblechs aus einem leitfähigen Material verbunden werden, wodurch ermöglicht wird, dass die Batteriepacks intern verbunden werden.

WO 2009/011539 A2 offenbart ein Batteriepack, bei dem mehrere Sekundärbatteriezellen über ein Verbindungselement elektrisch miteinander verbunden sind, während die Sekundärbatteriezellen in einem Aufnahmeteil eines Packungsgehäuses ohne Trennwand angebracht sind. Das Verbindungselement ist elastisch und wird zwischen die Batteriezellen gedrückt.

Ein Ausfall einer einzelnen Zelle darf dabei nicht zum Ausfall des Batteriepacks oder Batterieblocks führen. Außerdem sollte grundsätzlich auch ein Austausch von defekten Batteriepacks bzw. Batteriezellen ermöglicht werden.

Aufgabe der Erfindung ist es deshalb, einen Batterieblock anzugeben, welcher einfach herstellbar ist, in seinen Dimensionen bzw. der Anzahl der verbauten Batteriepacks bzw. Batteriezellen skalierbar ist, eine ausreichende Wärmeabfuhr während der Montage und während des Betriebs bereitstellt, eine zuverlässige elektrische Verbindung zwischen den Batteriepacks und zwischen den Anschlussstrukturen der Batteriepacks und den einzelnen Batteriezellen als auch den Ausfall von vereinzelten Batteriezellen ermöglicht, und einen vereinfachten Austausch eines fehlerhaften Batteriepacks ermöglicht.

Die Aufgabe wird durch die Merkmale der unabhängigen Ansprüche 1 und 13 gelöst. Vorteilhafte Ausgestaltungen sind den Unteransprüchen zu entnehmen.

Die Erfindung gemäß Ansprüchen 1 und 13 basiert auf der Idee, einen Batterieblock von seinen Außendimensionen und seiner äußeren Beschaltung so auszugestalten, dass ein Aneinanderreihen von mindestens zwei Batteriepacks so möglich ist, dass möglichst keine zusätzlichen Verbindungselemente zwischen den einzelnen Batteriepacks erforderlich sind, die aufgrund ihres reduzierten Querschnitts einer höheren Strombelastung nicht standhalten würden bzw. für einen erhöhten Stromfluss eine Begrenzung darstellen würden.

Darüber hinaus wird mit dem erfindungsgemäßen Batterieblock vermieden, zusätzliche Kontaktstellen zwischen den Batteriepacks beim Verschalten von Batteriepacks zu erzeugen, die in ihrer elektrischen Verbindung wiederum einen Kontaktwiderstand darstellen und ausfallen können.

Erfindungsgemäß ist daher vorgesehen, zwei Batteriepacks so zu verschalten, dass die außen liegenden Anschlussstrukturen von zwei benachbarten Batteriepacks so aneinander liegen, dass eine großflächige Verbindung der Anschlussstrukturen ohne zusätzliche elektrische Verbindungselemente ermöglicht wird. Das heißt, ein Batteriepack weist an seiner Ober- bzw. Unterseite eine großflächige Anschlussstruktur, bspw. in Form einer Platte auf, die einen großen Stromfluss von den einzelnen Zellen innerhalb eines Batteriepacks verträgt. Diese Anschlussstrukturen der Batteriepacks werden so aneinander liegend angeordnet, dass ein zuverlässiger Stromfluss von dem einen Batteriepack zu dem anderen benachbarten Batteriepack ermöglicht wird. Dies wird durch ein Aneinanderpressen von zwei Batteriepacks gewährleistet. Der Druck kann dabei entweder durch eine entsprechende Anpressvorrichtung bereitgestellt werden, bspw. über wenigstens einen Anpressstab, der parallel zur Längsachse der Batteriezellen verläuft oder um die Batteriezellen herum verläuft. Die Anpressvorrichtung kann auch um den Außenumfang der mehreren Batteriepacks herumgelegt werden, bspw. in Form eines Spannbandes. Es ist ebenso möglich Anpressbänder an den Außenrändern der Batteriepacks anzuordnen, um einen entsprechenden Druck auf die mehreren Batteriepacks auszuüben, so dass die Anschlussstrukturen aneinander gepresst werden. Alternativ kann der Druck auch von einem externen Gehäuse bereitgestellt werden, das die mehreren Batteriepacks aufnimmt, so dass die außen liegenden Anschlussstrukturen von benachbarten Batteriepacks aneinander gepresst werden, um somit einen zuverlässigen Stromfluss von einem Batteriepack zum nächsten Batteriepack zu gewährleisten.

Erfindungsgemäß umfasst ein Batterieblock daher wenigstens zwei Batteriepacks, wobei jedes Batteriepack wenigstens zwei Batteriezellen umfasst. Jede Batteriezelle des Batteriepacks weist auf einer ersten Seite einen elektrisch positiven Anschlusskontakt auf, wobei auf der gegenüberliegenden Seite des Batteriepacks der elektrisch negative Anschlusskontakt angeordnet ist. Jeder elektrischen Anschlussseite eines Batteriepacks ist eine Anschlussstruktur zugeordnet, wobei die elektrischen Anschlusskontakte der Batteriezellen des Batteriepacks jeweils elektrisch mit der zugeordneten Anschlussstruktur verbunden sind.

Die elektrisch entgegengesetzt gepolten Anschlussstrukturen von zwei benachbarten Batteriepacks sind dabei erfindungsgemäß so aneinander gelegt, dass eine großflächige Verbindung zwischen den Batteriepacks erzielt wird. Dies erfordert eine plane und leitende Außenstruktur eines Batteriepacks. Nur so kann ein großflächiger Kontakt zwischen Batteriepacks entstehen ohne dass Querschnittsverjüngungen einen Stromfluss beschränken können.

Je nach Ausrichtung der Batteriepacks können somit die Längsachsen der Batteriezellen horizontal verlaufen, wobei dann die Anschlussstrukturen vertikal zu der horizontalen Ausrichtung der Batteriezellen angeordnet sind. Mit der erfindungsgemäßen Ausgestaltung der Batteriepacks ist es aber ebenso möglich, bei vertikal verlaufenden Längsachsen der Batteriezellen die Anschlussstrukturen dazu im Wesentlichen horizontal anzuordnen. Bei einer derartigen Anordnung wird durch ein Übereinanderstapeln von zwei Batteriepacks und deren Gewicht schon ein zuverlässig hoher Druck auf das unten liegende Batteriepack ausgeübt, so dass bereits hier von einer großflächigen elektrischen Verbindung zwischen den beiden Batteriepacks gesprochen werden kann.

Die Batteriepacks, die zu einem Batterieblock zusammengeschaltet werden, sind dabei in Serie bzw. in Reihe geschaltet. Die einzelnen Batteriezellen in einem Batteriepacks sind parallel geschaltet. Vorzugsweise werden die Batteriepacks des Batterieblocks durch Druck auf die außen liegenden Batteriepacks aneinandergepresst. Wie bereits oben erwähnt, kann dieser Druck verschiedenartig bereitgestellt werden. Dazu werden weiter unten Ausführungsbeispiele beschrieben. Beim Zusammenschalten von wenigstens zwei Batteriepacks, die in Serie geschaltet sind, befinden sich an den gegenüberliegenden Außenseiten des Batterieblocks elektrisch entgegengesetzte Anschlusskontakte der Batteriezellen, d.h. auf einer Seite des Batterieblocks befinden sich die elektrisch negativen Anschlusskontakte und auf der anderen Außenseite des Batterieblocks befinden sich elektrisch positive Anschlusskontakte. Die zwei benachbarten Batteriepacks sind dabei so verschaltet, dass die elektrisch positiven Anschlusskontakte eines Batteriepacks mit den elektrisch negativen Anschlusskontakten des benachbarten Batteriepacks über die entsprechend zugeordneten Anschlussstrukturen in Verbindung stehen.

Die wenigstens zwei Batteriepacks, die zu einem Batterieblock verschaltet werden, können vorzugsweise durch wenigstens ein Anpressmittel, insbesondere einen Anpressstab, aneinandergepresst werden. Die Anzahl der erforderlichen Anpressstäbe, um eine großflächige Verbindung zwischen den Anschlussstrukturen der jeweiligen benachbarten Batteriepacks zu erzielen, hängt von dem Einsatzgebiet des Batterieblocks einerseits ab und andererseits von der Menge der Batteriezellen innerhalb eines Batteriepacks.

Die Anordnung der Zellen innerhalb eines Batteriepacks kann an die geometrischen Anforderungen bzw. den Stauraum angepasst werden, der zur Aufnahme des Batterieblocks bereitsteht. Je nach geometrischer Form eines Batteriepacks können verschieden viele Anpressstäbe verwendet werden, um einen ausreichenden Anpressdruck auf die benachbarten Batteriepacks eines Batterieblocks zu erreichen.

Ein Anpressstab weist vorzugsweise eine isolierende Ummantelung auf, um somit einen elektrischen Kurzschluss mit den Anschlussstrukturen bzw. den elektrischen Anschlusskontakten der Batteriezellen zu vermeiden. Es ist aber auch möglich, den Anpressstab aus einem elektrisch nicht leitenden Material herzustellen.

Der Anpressstab bzw. eine Anpressvorrichtung kann entweder durch die Batteriepacks des Batterieblocks hindurch verlaufen oder im Randbereich der Batteriepacks angeordnet sein, und um die Anzahl der Batteriepacks des Batterieblocks herumgeführt sein, um entsprechenden Druck auf die einzelnen Batteriepacks auszuüben, um einen guten Kontakt zwischen den Anschlussstrukturen zu erreichen.

Vorzugsweise weist der Anpressstab bzw. die Anpressvorrichtung Befestigungsmittel auf bzw. kann mit diesen verbunden werden, die zum Aneinanderpressen der wenigstens zwei Batteriepacks erforderlich sind. Diese können durch Muttern, Federelemente, Spannschrauben, Spanngurte, Klemmbügel und/oder Halteklammern realisiert sein.

Jedes Batteriepack enthält eine erste und zweite Anschlussstruktur, wobei diese jeweils wenigstens eine Durchgangsöffnung zur Aufnahme des wenigstens einen Anpressstabes aufweisen.

Um einen Batterieblock in dem dafür vorgesehenen Gerät entsprechend anzuschließen, ist an den Außenseiten der zusammengesetzten Batteriepacks jeweils eine Kontaktplatte vorgesehen, die einen Anschlussbereich zum Anschluss des Batterieblocks an ein Ladegerät oder an einen elektrischen Verbraucher aufweist. Die Kontaktplatte ist dazu vorzugsweise aus einem elektrisch leitenden Material hergestellt und liegt großflächig an der Anschlussstruktur des jeweils außen liegenden Batteriepacks an.

In einem bevorzugten Ausführungsbeispiel weist die Kontaktplatte ähnliche Abmessungen auf wie eine Anschlussstruktur und ragt jedoch in einem Bereich über die Abmessungen eines Batteriepacks hinaus, um einen elektrischen Anschlussbereich, der von außen zugänglich ist, aufzuweisen. Ähnlich wie die Anschlussstrukturen weist auch die Kontaktplatte wenigstens eine Durchgangsbohrung auf, die zur Aufnahme des Anpressstabes vorgesehen ist. Wenn zum Zusammenpressen von mehreren Batteriepacks mehrere Anpressstäbe erforderlich sind, weist auch die Kontaktplatte eine entsprechende Anzahl von Durchgangsbohrungen auf, die im zusammengesetzten Zustand mit den Durchgangsbohrungen der Anschlussstrukturen fluchten.

Bei einem Batterieblock, der aus wenigstens zwei Batteriepacks zusammengesetzt ist, wobei ein Batteriepack mehrere Batteriezellen enthält, fließen beim Lade- bzw. Entladevorgang sehr hohe Ströme. Daher ist in einem bevorzugten Ausführungsbeispiel an den Außenseiten des Batterieblocks, an denen sich jeweils eine Kontaktplatte befindet, vorgesehen, eine elektrisch isolierende Druckplatte anzuordnen. Diese elektrisch isolierende Druckplatte deckt die Kontaktplatte vollständig ab. Dadurch kann der Batterieblock sicher gehandhabt werden. Es kann auch vorgesehen sein, dass die Druckplatte den Anschlussbereich der Kontaktplatte frei lässt. Analog zur Kontaktplatte bzw. zu den Anschlussstrukturen weist die Druckplatte auch wenigstens eine Durchgangsbohrung auf, die mit der Durchgangsbohrung der Kontaktplatte bzw. den Durchgangsöffnungen der Anschlussstrukturen fluchten, um den wenigstens einen Anpressstab aufzunehmen.

Somit ergibt sich in der einfachsten Ausgestaltung ein Batterieblock, der aus zwei Batteriepacks zusammengesetzt ist, wobei jedes Batteriepack zwei auf gegenüberliegenden Seiten angeordnete Anschlussstrukturen enthält, die jeweils mit den elektrischen Anschlüssen der Batteriezellen verbunden sind, wobei die innen liegenden Anschlussstrukturen der beiden Batteriepacks aneinandergepresst sind und die beiden außen liegenden Anschlussstrukturen der Batteriepacks jeweils mit einer Kontaktplatte großflächig in Verbindung gebracht werden. Über die beiden außen liegenden Druckplatten und wenigstens einen Anpressstab werden die zwei Batteriepacks und die Kontaktplatten so aneinandergepresst, dass jeweils ein großflächiger elektrischer Kontakt zwischen den außen liegenden Anschlussstrukturen und den Kontaktplatten bzw. zwischen den beiden eng aneinander liegenden Anschlussstrukturen zwischen den beiden Batteriepacks gewährleistet wird.

Der Anpressstab verläuft vorzugsweise parallel zur Längsachse der Batteriezellen, wobei wenigstens ein Endbereich des wenigstens einen Anpressstabes aus den außen liegenden Seiten des Batteriepacks heraus ragt. Vorzugsweise ragt der eine Endbereich aus den außen liegenden Seiten des Batterieblocks, die von den Druckplatten begrenzt werden, heraus. Das heißt, in einem Ausführungsbeispiel ist es möglich, dass der Anpressstab auf beiden Seiten aus den aneinander liegenden bzw. benachbarten Batteriepacks heraus ragt, als auch aus den an den Außenseiten der Batteriepacks befindlichen Kontaktplatten und Druckplatten.

Ein Batteriepack enthält wenigstens eine Haltestruktur zur Aufnahme der wenigstens zwei Batteriezellen. Die Haltestruktur ist dabei vorzugsweise aus einem elektrisch isolierenden Material hergestellt und ermöglicht eine Fixierung der Batteriezellen innerhalb des Batteriepacks.

In einem bevorzugten Ausführungsbeispiel ist vorgesehen, dass die Haltestruktur eine Fläche aufweist, auf der die Anschlussstruktur aufliegt, wobei die Anschlussstruktur mit den elektrisch negativen oder den elektrisch positiven Anschlusskontakten der Batteriezellen verbunden wird. Um zwei Batteriepacks miteinander zu verbinden, weist vorzugsweise auch die Haltestruktur wenigstens eine Durchgangsöffnung auf, durch die ein Anpressstab hindurchgeführt werden kann.

Daneben weist die Haltestruktur Anschlussöffnungen und Aufnahmeöffnungen auf, wobei in die Aufnahmeöffnungen die Batteriezellen eingesetzt werden und die Batteriezellen durch die Anschlussöffnung hindurch mit der Anschlussstruktur über ein Anschlusselement verbunden werden.

Um einem elektrischen Kurzschluss bei einer Beschädigung eines Elements eines Batterieblocks entgegenzuwirken, ist es vorteilhaft, dass die Durchgangsöffnung in der Haltestruktur einen kleineren Durchmesser aufweist als die Durchgangsöffnung der Anschlussstrukturen bzw. die Durchgangsbohrungen der Kontaktplatte. Damit wird sichergestellt, dass selbst bei beschädigter isolierender Ummantelung des Anpressstabes zwischen dem Anpressstab und den Anschlussstrukturen ausreichend Platz ist, um einen elektrischen Kurzschluss zu verhindern.

Vorzugsweise sind bei einem Batteriepack eine erste Haltestruktur auf der Seite der elektrisch positiven Anschlusskontakte und eine zweite Haltestruktur auf der Seite der elektrisch negativen Anschlusskontakte angeordnet. Die positiven elektrischen Anschlusskontakte der Batteriezellen sind jeweils mit einem Anschlusselement an einer ersten Anschlussstruktur des Batteriepacks angeschlossen und die elektrisch negativen Anschlusskontakte der Batteriezellen sind jeweils mit einem Anschlusselement an einer zweiten Anschlussstruktur angeordnet, wobei die erste und zweite Anschlussstruktur jeweils der ersten bzw. zweiten Haltestruktur zugeordnet sind und auf der Außenfläche dieser Haltestruktur aufliegen.

Die Anschlussstrukturen sind vorzugsweise großflächig ausgebildet und ermöglichen somit einen Stromfluss, der der Summe der Einzelströme der Batteriezellen innerhalb eines Batteriepacks entspricht.

Die Anschlussstrukturen sind aus einem elektrisch leitenden Material hergestellt. Vorzugsweise decken die Anschlussstrukturen die jeweiligen Haltestrukturen fast oder vollständig ab. Durch die flächige Ausbildung der Anschlussstruktur wird eine gleichmäßige Stromverteilung zu allen angeschlossenen Batteriezellen ermöglicht. Über den Querschnitt der Anschlussstruktur und die jeweilige Fläche, d. h. über das für die Leitung des Stroms erforderliche Volumen wird die maximale Stromleitungsfähigkeit definiert. Da in einem derartigen Batteriepack teilweise über hundert Batteriezellen platziert sind und jede Batteriezelle kurzzeitig hohe Ströme zur Verfügung stellen kann, müssen die jeweiligen Anschlussstrukturen eine ausreichend hohe Stromfestigkeit bereitstellen, die der Summe der einzelnen Ströme der einzelnen Batteriezellen entspricht. D. h. über die Anschlussstrukturen fließen im Lade- und insbesondere im Entladeprozess bei einer Maximalanforderung über 100A. Vorzugsweise ist die Anschlussstruktur aus einem Metall ausgebildet. Hier bietet sich eine Verwendung von Kupfer an. Es ist jedoch auch möglich, die Anschlussstruktur aus einem anderen elektrisch leitenden Material, beispielsweise Aluminium herzustellen. Das Anschlusselement, worüber die Verbindung von der Anschlussstruktur zum elektrischen Anschlusskontakt der Batteriezelle hergestellt wird, ist aus einem zweiten anderen Metall hergestellt, beispielsweise aus Nickel oder Aluminium. Hier eignet sich der Einsatz eines Hiluminbandes. Es ist jedoch auch möglich, ein anderes elektrisch leitendes Material für die Anschlusselemente zu verwenden.

Dazu weist die Anschlussstruktur vorzugsweise eine Fläche auf, die wenigstens der Summe der Querschnitte der im Batteriepack enthaltenen Batteriezellen entspricht.

Vorzugsweise kann die Länge einer Anschlussstruktur größer sein als die Summe der Einzellängen oder der Einzeldurchmesser der Batteriezellen in Längsrichtung. Andererseits kann die Breite der Anschlussstruktur größer sein als die Summe der Einzelbreiten oder Einzeldurchmesser der Batteriezellen in Breitenrichtung. Somit deckt die Anschlussstruktur fast die komplette Fläche der Haltestruktur ab, in der die einzelnen Batteriezellen eingesetzt sind. Dabei ist es jedoch vorteilhaft, wenn die Haltestruktur einen leichten Überstand zu der Anschlussstruktur aufweist, um somit zu verhindern, dass ein elektrisch leitfähiges Element nach außen ragt.

Die Batteriezellen der Batteriepacks sind vorzugsweise in der ersten und zweiten Haltestruktur fixiert, wobei die erste und zweite Haltestruktur durch ein erstes Befestigungselement aneinander fixiert sind. Damit wird gewährleistet, dass die beiden Haltestrukturen in Ihrer Ausrichtung und ihrem Abstand zueinander fixiert sind und somit die Batteriezellen innerhalb der ersten Haltestruktur aufnehmen können. Das erste Befestigungselement kann somit als Abstandshalter zwischen den Haltestrukturen dienen. Das erste Befestigungselement ist vorzugsweise elektrisch isolierend und kann mittels Schrauben oder anderer Befestigungen durch die Haltestrukturen hindurch befestigt werden.

Die Anschlussstrukturen können an der Haltestruktur mit einem zweiten Befestigungselement fixiert werden. Auch das zweite Befestigungselement sollte vorzugsweise elektrisch isolierend sein. Dazu kann die Haltestruktur vorzugsweise ein Blindloch aufweisen, in das eine Schraube geschraubt wird, die die Anschlussstruktur an der Haltestruktur fixiert. Das zweite Befestigungselement zur Befestigung der Anschlussstruktur an der Haltestruktur kann jedoch auch weggelassen werden, da die Anschlusselemente zur Verbindung mit den elektrischen Anschlusskontakten der Batteriezellen zuerst an der innen liegenden Fläche der Anschlussstruktur befestigt werden und danach beispielsweise mittels Punktschweißen oder Löten an den Anschlusskontakten der Batteriezellen befestigt werden, so dass aufgrund der Vielzahl der Kontakte die Anschlussstruktur sicher auf der Haltestruktur aufliegt.

Das heißt, ein Batteriepack weist mehrere Batteriezellen auf, die jeweils einen elektrisch positiven und einen elektrisch negativen Anschlusskontakt haben. Jedem dieser elektrisch positiven und elektrisch negativen Anschlusskontakte ist ein Anschlusselement zugeordnet, wobei die Anschlusselemente, die mit den elektrisch negativen Anschlusskontakten der Zellen verbunden sind, mit einer Anschlussstruktur verbunden sind und die Anschlusselemente, die mit den elektrisch positiven Anschlusskontakten der Batteriezellen verbunden sind, mit der anderen Anschlussstruktur verbunden sind. Dabei sind die Anschlusselemente an einer der Haltestruktur zugewandten Seite der Anschlussstruktur befestigt, um somit mechanisch geschützt zu sein und außerdem zu ermöglichen, dass die Anschlussstruktur auf ihrer außen liegenden Seite eine plane Oberfläche aufweist, die ein Aneinanderlegen bzw. Aneinanderpressen von zwei Anschlussstrukturen zum Zusammenschalten in einem Batterieblock ermöglicht.

Vorzugsweise liegt das Anschlusselement zwischen der Haltestruktur und der Anschlussstruktur und ragt in die Aufnahmeöffnung der Haltestruktur hinein.

Die oben genannte Aufgabe wird auch durch ein Verfahren zum Herstellen eines Batterieblocks gelöst. Dazu werden zwei fertige Batteriepacks bereitgestellt, wobei jedes Batteriepack wenigstens zwei Batteriezellen umfasst, Die Batteriezellen des Batteriepacks weisen auf einer ersten Seite elektrisch positive Anschlusskontakte und auf einer zweiten Seite die elektrisch negativen Anschlusskontakte auf, die auf der gegenüberliegenden Seite des Batteriepacks angeordnet sind, wobei jeder elektrischen Anschlussseite des Batteriepacks jeweils eine Anschlussstruktur zugeordnet ist und die elektrischen Anschlusskontakte der Batteriezellen eines Batteriepacks jeweils elektrisch mit der zugeordneten Anschlussstruktur verbunden sind, wobei benachbarte Batteriepacks des Batterieblocks aneinandergepresst werden, so dass die elektrisch entgegengesetzt gepolten Anschlussstrukturen von zwei benachbarten Batteriepacks aneinander liegen, um eine großflächige Verbindung zwischen den benachbarten Batteriepacks zu erzielen.

In einer ersten Ausgestaltung des Verfahrens werden zwei Batteriepacks so aneinander angeordnet, dass sich die einander zugewandten Anschlussstrukturen berühren, wobei dann eine Anpressvorrichtung angebracht wird, die die beiden Batteriepacks aneinanderpresst. Vorzugsweise wird dabei ein Anpressstab durch die Durchgangsöffnungen hindurchgeführt, der vorzugsweise aus den Außenseiten der wenigstens zwei Batteriepacks hinaus ragt. Auf diesen wenigstens einen Anpressstab wird an den jeweiligen Außenseiten der zwei aneinandergereihten Batteriepacks jeweils eine Kontaktplatte aufgesetzt, wobei der Anpressstab jeweils durch die Durchgangsbohrung der Kontaktplatte hindurchdringt. Danach wird auf die jeweils außen liegende Kontaktplatte eine elektrisch isolierende Druckplatte aufgesetzt, durch die ebenfalls der wenigstens eine Anpressstab hindurchdringt. Die beiden außen liegenden Druckplatten werden nun so miteinander verspannt bzw. aneinandergepresst, dass ein großflächiger Kontakt zwischen den Anschlussstrukturen der Batteriepacks und der Kontaktplatten entsteht, wobei dazu Befestigungsmittel verwendet werden.

In einem alternativen Verfahren wird der wenigstens eine Anpressstab zuerst durch die eine Druckplatte geführt, wonach eine erste Kontaktplatte auf den aus der Druckplatte herausragenden Anpressstab aufgesetzt wird. Danach werden wenigstens zwei Batteriepacks auf den wenigstens einem Anpressstab aufgesetzt und in Richtung Druckplatte und Kontaktplatte bewegt. Auf der anderen Seite des Batterieblocks wird eine zweite Kontaktplatte aufgesetzt, die an der außen liegende Anschlussstruktur des zuletzt aufgesetzten Batteriepacks eng anliegt und auch vom Anpressstab durchdrungen wird. Letztlich wird eine zweite elektrisch isolierende Druckplatte auf die zweite Kontaktplatte aufgesetzt, wobei dann die erste und zweite Druckplatte mit den dazwischen angeordneten Kontaktplatten und den wenigstens zwei Batteriepacks mittels der Befestigungsmittel so aneinandergepresst werden, dass ein zuverlässiger elektrischer Kontakt zwischen den Anschlussstrukturen und den Kontaktplatten bereitgestellt wird.

Im Folgenden werden anhand der Figuren Ausführungsbeispiele der vorliegenden Erfindung näher beschrieben. In den Zeichnungen zeigen:
- Fig. 1: eine perspektivische Ansicht eines erfindungsgemäßen Batteriepacks;
- Fig. 2: eine Haltestruktur für ein erfindungsgemäßes Batteriepack;
- Fig. 3a: eine Schnittdarstellung durch ein erfindungsgemäßes Batteriepack, die die Befestigung einer Batteriezelle zwischen zwei Haltestrukturen gemäß einem Ausführungsbeispiel der vorliegenden Erfindung darstellt;
- Fig. 3b: eine Schnittdarstellung durch ein erfindungsgemäßes Batteriepack, die eine Batteriezelle gemäß einem anderen Ausführungsbeispiel zwischen zwei Haltestrukturen darstellt;
- Fig. 4: eine perspektivische Ansicht eines Batteriepacks während der Bestückung;
- Fig. 5: eine Ansicht einer Anschlussstruktur von unten;
- Fig. 6: eine perspektivische Ansicht eines alternativen Batteriepacks gemäß der vorliegenden Erfindung;
- Fig. 7: eine perspektivische Ansicht zur Darstellung einer Montage eines erfindungsgemäßen Batterieblocks;
- Fig. 8: eine weitere perspektivische Ansicht zur Montage eines Batterieblocks;
- Fig. 9: einen erfindungsgemäßen Batterieblock;
- Fig. 10: eine Schnittdarstellung durch einen erfindungsgemäßen Batterieblock, der die Aufnahme von Batteriezellen in den einzelnen Batteriepacks und deren erfindungsgemäße Befestigung darstellt;
- Fig. 11: eine alternative Ausgestaltung einer Haltestruktur;
- Fig. 12: eine andere alternative Ausgestaltung einer Haltestruktur;
- Fig. 13: eine alternative Ausgestaltung eines Batterieblocks in einem vorgefertigten Gehäuse;
- Fig. 14: eine Darstellung zur Zusammensetzung von mehreren erfindungsgemäßen Batterieblocks; und
- Fig. 15: eine alternative Montage von erfindungsgemäßen Batteriepacks.

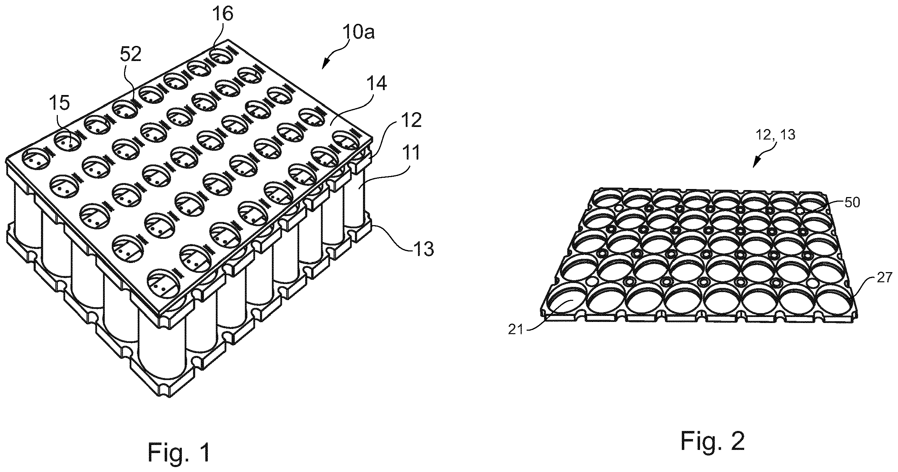

In Fig. 1 ist ein erfindungsgemäßes Batteriepack 10a dargestellt, bei dem Batteriezellen 11, die beispielsweise Lithium enthalten, zwischen einer ersten Haltestruktur 12 und einer zweiten Haltestruktur 13 fixiert sind. Auf der ersten Haltestruktur 12 ist eine Anschlussstruktur 14 aufgelegt, wobei die Anschlussstruktur 14 Kontaktöffnungen 16 enthält, über die die elektrischen Kontakte der Batteriezellen 11 mit Anschlusselementen 15 verbunden werden. Die Anschlusselemente 15 sind an einer Seite der Anschlussstruktur 14 befestigt, wobei diese Seite der Anschlussstruktur 14 auf der nach oben gerichteten Seite der Haltestruktur 12 aufliegt, so dass die Anschlusselemente 15 zwischen der Anschlussstruktur 14 und der Haltestruktur 12 angeordnet sind, und in eine Aufnahmeöffnung 21 der Haltestruktur 12 hinein ragen, um somit jeweils an den elektrischen Anschlusskontakten 33, 34 der Batteriezellen 11 angeschlossen zu werden. Die elektrischen Anschlüsse an der Unterseite der Batteriezellen 11 im Bereich der zweiten Haltestruktur 13 sind gleichartig aufgebaut, wie bei der Anschlussstruktur 14 im Bereich der ersten Haltestruktur 12. Mit dem Bezugszeichen 52 ist die Verbindungsstelle des Anschlusselements an der Anschlussstruktur 14 bezeichnet. Die als Blechstreifen ausgestalteten Anschlusselemente 15 werden beispielsweise durch Reibschweißen an der Anschlussstruktur 14 befestigt, da damit eine großflächige Verbindung zwischen der Anschlussstruktur 14 und dem jeweiligen Anschlusselemente 15 erreicht wird und wenig Wärme erzeugt wird. An den elektrischen Anschlusskontakten 33, 34 werden die Anschlusselemente 15 mittels Punktschweißen oder Löten verbunden.

Die Anschlusselemente 15, die streifenförmig ausgebildet sind, werden mittels eines Fügeverfahrens an der Anschlussstruktur 14 befestigt und ragen jeweils in die entsprechende Kontaktöffnung 16 hinein. Als besonders vorteilhaftes Verbindungsverfahren hat sich ein Reibschweißen bzw. ein Ultraschallschweißen der Anschlusselemente 15 an der jeweiligen Anschlussstruktur 14 bewährt, da bei einem derartigen Verfahren eine ausreichende mechanische und auch elektrische Verbindung zwischen Anschlussstruktur 14 und Anschlusselement 15 erzielt wird. Die Wärmeentwicklung beim Reibschweißen ist wesentlich geringer als bei einem Punktschweißverfahren bzw. einem Lötverfahren. Darüber hinaus, ist es beim Verbinden eines dickeren Materials mit einem dünneren schwierig mit einem Punktschweißverfahren eine zuverlässige mechanische und elektrische Verbindung zu erzielen, da die Energie vom dickeren Material absorbiert wird. Beim Reibschweißen hingegen wird bei den zu verbindenden Materialien an den jeweiligen Oberflächen eine flächige Verbindung geschaffen. Dabei werden die beiden zu verbindenden Flächen unter Druck relativ zueinander bewegt, wodurch eine Erwärmung und Plastifizierung des Materials auftritt. Die zu verbindenden Flächen werden dann mit hohem Druck aneinander gepresst. Somit kann eine zuverlässige mechanische als auch elektrische Verbindung auch bei den verschiedenen Materialstärken und verschiedenen Materialien erreicht werden. Die Anschlussstruktur 14 kann eine wesentlich größere Dicke aufweisen, als das Anschlusselement 15. Weiter ist es vorteilhaft, die Anschlussstrukturen 14 mit den entsprechend verbundenen Anschlusselementen 15 so vorzufertigen, dass diese vor der Montage des Batteriepacks 10a mit den einzelnen Batteriezellen 11 gefertigt werden können. Nachdem die Anschlussstruktur 14 mit den darauf befestigten Anschlusselementen 15, die jeweils in die Kontaktöffhungen 16 hineinragen, auf der jeweiligen Haltestruktur 12, 13 platziert ist, lassen sich die elektrischen Verbindungen zwischen den positiven bzw. negativen Anschlusskontakten 33, 34 der jeweiligen Batteriezellen 11 herstellen. Hier ist weiterhin ein Punktschweißen bzw. ein Löten möglich, um eine zuverlässige elektrische Verbindung des elektrischen Anschlusses der Batteriezelle 11 mit den Anschlusselementen 15 zu gewährleisten. Das Anschlusselement 15 weist einen Querschnitt auf, der bei einem Strom oberhalb eines maximalen Lade- bzw. Entladestroms schmilzt, wodurch die Verbindung zwischen Anschlussstruktur 14 und Anschlusselement 15 unterbrochen und somit ein weiterer Stromfluss unterbunden wird. Darüber hinaus kann verhindert werden, dass sich eine Zelle 11 im Fehlerfall übermäßig erhitzt und bei einer entsprechenden Kettenreaktion das ganze Batteriepack 10a funktionsunfähig wird und gefährliche Situationen auftreten können. Zur thermischen Isolierung kann weiter eine wärmeisolierende Schicht zwischen der Anschlussstruktur 14 und der Haltestruktur 12, 13 angeordnet werden, beispielsweise aus Teflon.

Die erste bzw. zweite Haltestruktur 12, 13 ist in der Fig. 2 dargestellt. Die Haltestruktur 12, 13 ist aus einem elektrisch isolierenden Material hergestellt und weist mehrere Aufnahmeöffnungen 21 auf, in die die Batteriezellen 11 eingesetzt werden. Vorzugsweise sind die Aufnahmeöffnungen 21 mit einem umlaufenden Flansch 27 versehen, auf dem die Batteriezelle 11 nach dem Einsetzen in die Aufnahmeöffnung 21 aufliegt. Weiter weisen die Haltestrukturen 12, 13 zwischen den einzelnen Aufnahmeöffnungen 21 einen definierten Abstand auf, um somit eine definierte Anordnung der Batteriezellen 11 zueinander zu erreichen und für eine ausreichende Durchlüftung zwischen den Batteriezellen 11 zu sorgen. Zwischen den Aufnahmeöffnungen 21 sind Durchgangsöffnungen 50 vorgesehen, die zur Befestigung der ersten und zweiten Haltestruktur 12, 13 aneinander bzw. zur Befestigung von mehreren Batteriepacks 10a aneinander verwendet werden.

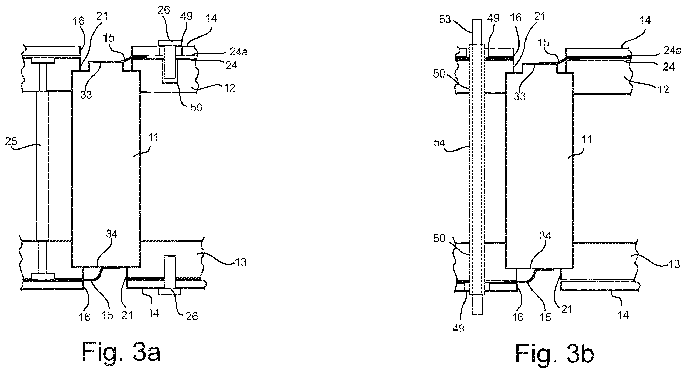

Fig. 3a zeigt einerseits die Befestigung der Batteriezelle 11 an ihrem positiven elektrischen Anschlusskontakt 33 mittels dem Anschlusselement 15 bzw. die elektrische Verbindung am negativen elektrischen Anschlusskontakt 34 über ein Anschlusselement 15 mit der untenliegenden Anschlussstruktur 14. Es ist deutlich zu erkennen, dass das Anschlusselement 15 zwischen der ersten Haltestruktur 12 und der Unterseite der oberen Anschlussstruktur 14 aufliegt bzw. das untere Anschlusselement 15 zwischen der zweiten Haltestruktur 13 und der unteren Anschlussstruktur 14 angeordnet ist.

Auf der linken Seite der Zelle 11 ist eine erste mögliche Befestigungsvariante dargestellt. Zwischen den beiden Haltestrukturen 12, 13 ist ein Befestigungselement 25 vorgesehen, welches von zwei Schrauben, die durch die Haltestruktur 12, 13 hindurch greifen, fixiert wird und somit die Haltestrukturen 12, 13 mit den darin eingesetzten Batteriezellen 11 fixiert.

Alternativ bzw. zusätzlich können die Anschlussstrukturen 14 über Durchgangsöffnungen 49 in der Anschlussstruktur 14 mittels zweiten Befestigungselementen 26, beispielsweise in Form von Kunststoffschrauben 26, in Gewindebohrungen der ersten bzw. zweiten Haltestruktur 12 bzw. 13 befestigt werden. Statt einer Kunststoff-Gewindeschraube können auch Nieten, bspw. Kunststoffnieten mit einer Pressverbindung verwendet werden, um somit die Anschlussstrukturen 14 an den entsprechenden Haltestrukturen 12, 13 festzulegen. Über das erste Befestigungselement 25 lässt sich ein definierter Abstand zwischen den Haltestrukturen 12, 13 einstellen, so dass die Batteriezellen 11 zwischen der ersten und zweiten Haltestruktur 12, 13 sicher in den Aufnahmeöffnungen 21 der ersten bzw. zweiten Haltestruktur 12, 13 fixiert sind und keiner mechanischen Belastung ausgesetzt werden. Zusätzlich zur Fixierung der ersten und zweiten Haltestruktur 12, 13 mittels des ersten Befestigungselements ist 25 es möglich, die Batteriezellen 11 in der Aufnahmeöffhung 21 mit einem Klebstoff zu fixieren, wodurch die Montage erleichtert wird und ein Rotieren der Batteriezellen 11 vor der Verbindung mit den Anschlusselementen 15 verhindert wird.

Fig. 3b zeigt eine Schnittdarstellung durch ein Batteriepack mit einem Befestigungselement, welches ein Befestigen von mehreren Batteriepacks 10a, 10b, 10c aneinander ermöglicht. Sowohl die erste als auch die zweite Haltestruktur 12, 13 weisen jeweils eine Durchgangsöffnung 50 auf, wobei korrespondierend dazu die Anschlussstruktur 14 ebenfalls Durchgangsöffnungen 49 aufweist. Nachdem diese auf die Haltestruktur 12, 13 aufgelegt wurde, fluchten die Durchgangsöffnungen 49 und 50 miteinander und ermöglichen somit, einen Anpressstab 53 durch diese Durchgangsöffnungen 49 und 50 hindurchzuführen.

Der Anpressstab 53 weist vorzugsweise eine elektrisch isolierende Ummantelung 54 auf, da er durch die elektrisch leitenden Anschlussstrukturen 14 hindurchgeführt wird, ohne diese zu berühren. Um die Vermeidung einer Berührung weiter sicherzustellen, ist der Durchmesser der Durchgangsöffnung 49 in den Anschlussstrukturen 14 grösser als der Aussendurchmesser der Ummantelung 54, sodass zwischen der Ummantelung 54 und den Anschlussstrukturen 14 ein Spiel vorhanden ist, das zusätzlich zur Vermeidung eines elektrischen Kontaktes zwischen Anschlussstrukturen 14 und Anpressstab 53 beiträgt. Ein elektrischer Kontakt zwischen Anpressstab 53 und Anschlussstrukturen 14 wird somit selbst bei Ausfall der Ummantelung 54, beispielsweise aufgrund einer Beschädigung, vermieden. Der Durchmesser der Durchgangsöffnungen 50 in den Haltestrukturen 12, 13 ist geringer als der Durchmesser der Durchgangsöffnung 49 in den Anschlussstrukturen 14. Vorzugsweise ist der Durchmesser der Durchgangsöffnungen 50 in den Haltestrukturen 12, 13 derart auf den Aussendurchmesser der Ummantelung 54 abgestimmt, dass sich der Anpressstab 53 ohne Spiel durch die Durchgangsöffnungen 50 hindurchführen lässt. Aufgrund einer solchen Dimensionierung der Durchgangsöffnungen 50 wird zusätzlich zum Druck der Anpressvorrichtung eine Zentrierung geschaffen, die sicherstellt, dass ein gegenseitiges Verschieben der Anschlussstrukturen 14 von jeweiligen Batteriepacks, selbst bei ausserordentlich hohen mechanischen Einwirkungen vermieden wird. Ein zuverlässiger Stromfluss von einem Batteriepack zum nächsten Batteriepack ist damit auch bei extremen Bedingungen, wie sie beispielsweise bei Fahrzeugen vorkommen können, gegeben.

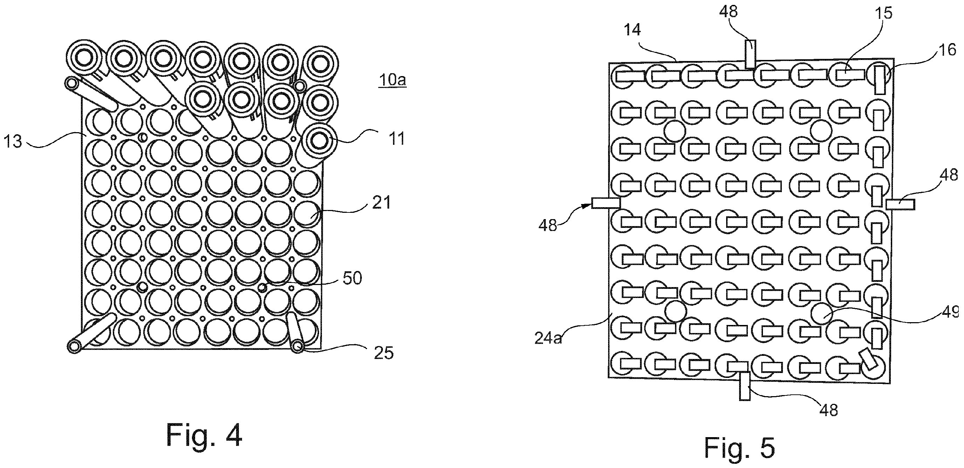

Fig. 4 zeigt den Aufbau eines Batteriepacks 10a während der Montage. Es ist dargestellt, dass einzelne Batteriezellen 11 bereits in der unteren bzw. zweiten Haltestruktur 13 eingesetzt sind. Weiter ist die Haltestruktur 13 bereits mit den ersten Befestigungselementen 25 versehen worden, die eine Befestigung mit der in Fig. 4 nicht dargestellten zweiten Haltestruktur 12 ermöglichen.

Fig. 5 zeigt eine erfindungsgemäße Anschlussstruktur 14. Hier ist eine Unterseite 24a der Anschlussstruktur 14 dargestellt, die, wie es in Fig. 3a bzw. 3b gezeigt, auf der Oberseite der jeweiligen Haltestruktur 12 oder 13 aufliegt. Die Anschlussstruktur 14 weist Kontaktöffnungen 16 auf. Dabei sind so viele Kontaktöffnungen 16 vorgesehen wie Batteriezellen 11 in die jeweiligen Haltestrukturen 12 bzw. 13 eingesetzt werden. In diese Kontaktöffnungen 16 ragen entsprechend Anschlusselemente 15 hinein, die vorzugsweise durch Reibschweißen an der Unterseite 24a der Anschlussstruktur 14 befestigt sind. Die Befestigung der Anschlusselemente 15 erfolgt bevor die Anschlussstruktur 14 mit den Anschlusselementen 15 an den elektrischen Anschlusskontakten 33, 34 der Batteriezellen 11 befestigt wird.

Die in Fig. 5 dargestellte Anschlussstruktur 14 weist darüber hinaus weitere Anschlüsse 48 auf, die eine Verbindung an ein Betriebsmanagementsystem ermöglichen. Weiter weist die Anschlussstruktur 14 gemäß Fig. 5 Durchgangsöffnungen 49 auf, die zur Durchführung von Anpressstäben 53 bzw. zur Aufnahme von ersten bzw. zweiten Befestigungselementen 25, 26 dienen. Dabei ist die Anzahl der Durchgangsöffnungen 49 in Fig. 5 nicht auf vier beschränkt. Die verschiedenen Durchgangsöffnungen 49 für die ersten und zweiten Befestigungselemente 25, 26 bzw. für den Anpressstab 53 können verschiedene Durchmesser aufweisen.

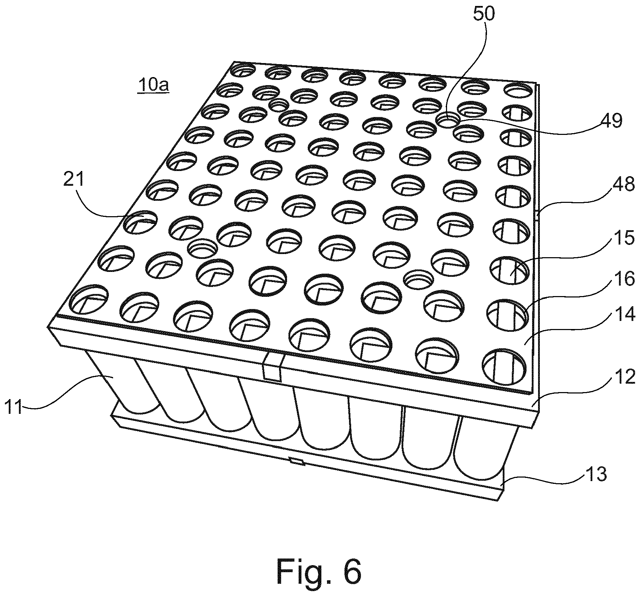

In Fig. 6 ist eine perspektivische Darstellung eines erfindungsgemäßen Batteriepacks 10a dargestellt. Ähnlich wie in Fig. 1 ist zu erkennen, dass die Anschlusselemente 15 zwischen der Anschlussstruktur 14 und der jeweiligen Haltestruktur 12 angeordnet sind und in die jeweiligen Kontaktöffnungen 16 bzw. Aufnahmeöffnungen 21 der Haltestruktur 12 hineinragen, um somit an den hier nicht dargestellten Anschlusskontakten 33, 34 der Batteriezellen 11 angeschlossen zu werden. Weiter zeigt das Batteriepack 10a gemäß Fig. 6, dass die Anschlussstruktur 14 Durchgangsöffnungen 50 aufweist, die einen größeren Durchmesser aufweisen als die Durchgangsöffnungen 49 der darunterliegenden Haltestrukturen 12, 13. Die Anschlüsse 48 für das BMS können um einen Rand der Haltestruktur 12, 13 herum gelegt werden.

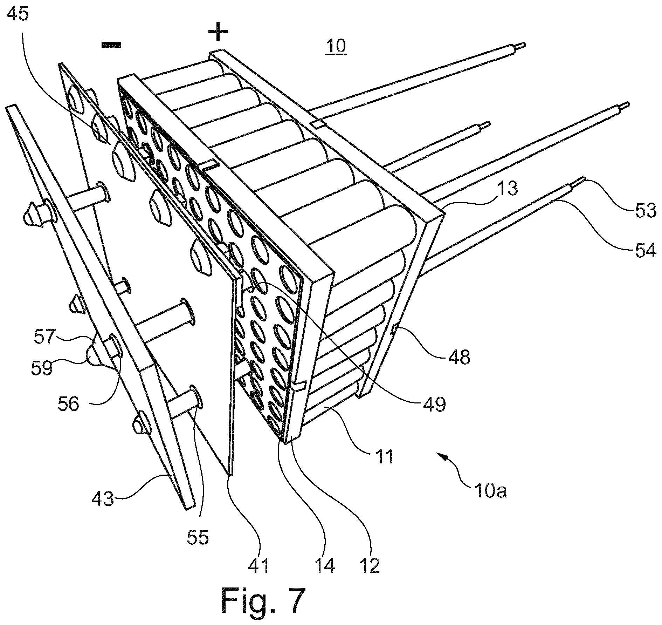

In Fig. 7 ist eine Montage eines erfindungsgemäßen Batterieblocks 10 dargestellt, wobei in dieser Darstellung bisher nur ein Batteriepack 10a montiert ist. Ein erfindungsgemäßer Batterieblock 10 umfasst eine Druckplatte 43, die Durchgangsbohrungen 56 zur Aufnahme von Anpressstäben 53 aufweist, die von einer elektrisch isolierenden Ummantelung 54 umgeben sind. Am Ende eines Anpressstabes 53 befinden sich ein Schraubenkopf 59 bzw. eine Mutter 58 und eine Scheibenfeder 57, um ein Durchrutschen des Anpressstabes 53 durch die Durchgangsbohrung 56 zu verhindern.

Nachdem wie in Fig. 7 dargestellt, die vier Anpressstäbe 53 durch die Druckplatte 43 hindurchgeführt wurden, wird eine elektrisch leitende Kontaktplatte 41, beispielsweise aus Kupfer, auf die Anpressstäbe 53 aufgesetzt und an die Druckplatte 43 herangeführt. Dabei durchdringen die Anpressstäbe 53 auch hier Durchgangsbohrungen 55 der Kontaktplatte 41. Die Kontaktplatte 41 steht an wenigstens einer Seite über die Druckplatte 43 hervor, um einen elektrischen Anschlussbereich 45 des Batterieblocks zu bilden. Nachdem die Kontaktplatte 41 auf die Druckplatte 43 aufgesetzt wurde, wird ein erstes Batteriepack 10a gemäß Fig. 6 auf die Anpressstäbe 53 aufgesetzt und in Richtung Kontaktplatte 41 verschoben. Auch hier durchdringen die Anpressstäbe 53 mit der jeweiligen Ummantelung 54 die Durchgangsöffnungen 49 der Anschlussstruktur 14 bzw. die Durchgangsöffnungen 50 der Haltestruktur 12 bzw. 13 jeweils der linken und rechten Seite des Batteriepacks 10a gemäß Fig. 7.

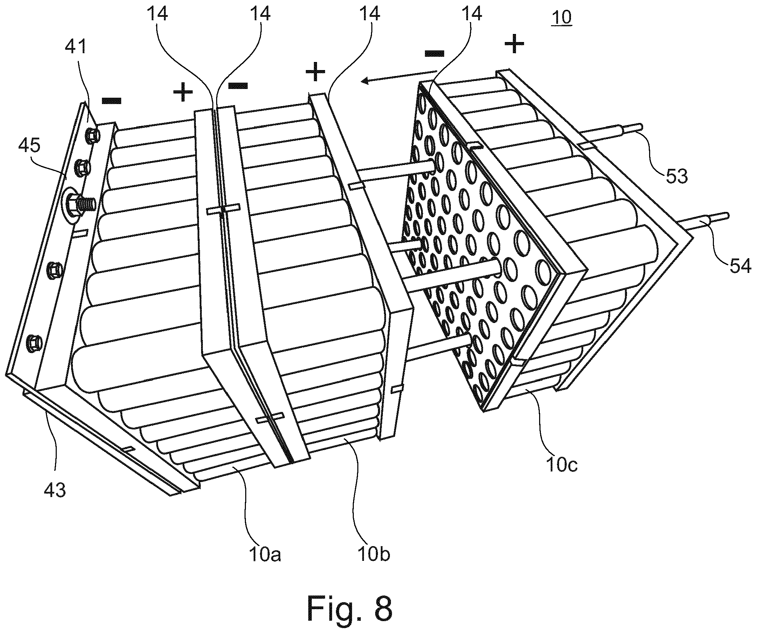

In Fig. 8 ist ein weiterer Fortschritt bei der Montage des Batterieblocks 10 zu erkennen. Es sind bereits zwei erfindungsgemäße Batteriepacks 10a, 10b auf die Anpressstäbe 53 aufgesetzt worden, wobei bereits ein dritter Batteriepack 10c auf die Anpressstäbe 53 aufgesetzt ist und gerade an die beiden bereits montierten Batteriepacks 10a, 10b herangeführt wird. Die Batteriepacks 10a, 10b, 10c sind dabei elektrisch in Reihe geschaltet, das heißt, die Batteriezellen 11 sind in den Batteriepacks 10a, 10b, 10c jeweils so angeordnet, dass alle elektrisch positiven Anschlusskontakte 33 zu einer Anschlussstruktur 14 ausgerichtet sind und die elektrisch negativen Anschlusskontakte 34 zur gegenüberliegenden Anschlussstruktur 14 ausgerichtet sind.

Wie in Fig. 8 dargestellt, wird an ein zweites Batteriepack 10b ein drittes Batteriepack 10c herangeführt, wobei der Pluspol des dritten Batteriepacks 10c an den entsprechenden Minuspol des zweiten Batteriepacks 10b herangeführt wird, so dass die Anschlussstrukturen 14 vollflächig aneinander liegen und somit einen bestmöglichen und großflächigen Kontakt zwischen den beiden Batteriepacks 10b, 10c zu ermöglichen, ohne zusätzliche Kabel zu verwenden bzw. zusätzliche Anschlussstrukturen zu erfordern.

Diese Aneinanderreihung von erfindungsgemäßen Batteriepacks ermöglicht eine sehr platzsparende Anordnung von Batteriezellen. Darüber hinaus ist durch das großflächige Aneinanderliegen der jeweiligen positiven bzw. negativen Anschlussstrukturen 14 der einzelnen Batteriepacks 10a, 10b, 10c eine großflächige elektrische Verbindung möglich, die eine geringe Wärmeentwicklung während des Stromflusses aufzeigt, wodurch eine optimale Temperaturgestaltung des Batterieblocks 10 gewährleistet wird.

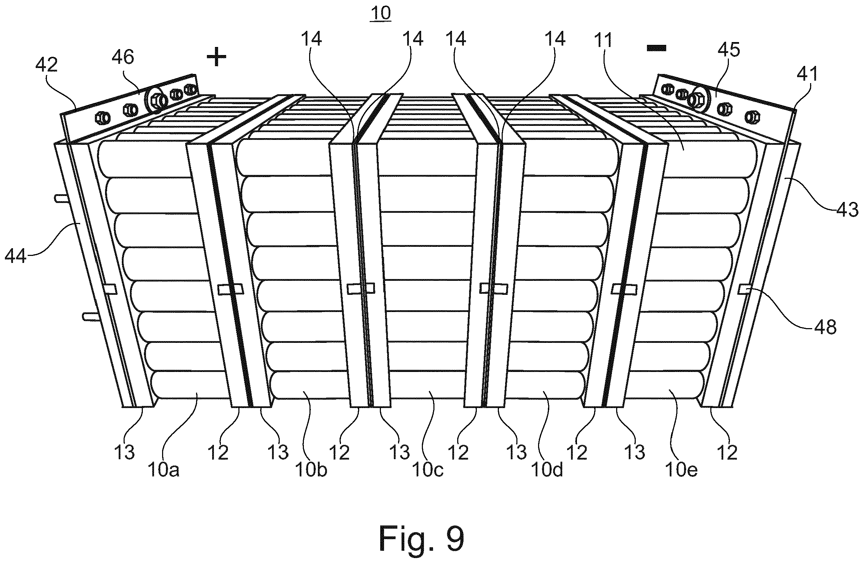

In Fig. 9 ist ein fertig montierter Batterieblock 10 dargestellt, der aus fünf einzelnen Batteriepacks 10a, 10b, 10c, 10d und 10e zusammengesetzt wurde. Jeder Batteriepack 10a, 10b, 10c, 10d und 10e ist auf seiner linken bzw. rechten Seite von einer Anschlussstruktur 14 begrenzt. Die Batteriepacks 10a bis 10e sind an den jeweiligen Außenseiten des ersten bzw. fünften Batteriepacks 10a, 10e von einer Kontaktplatte 41 und 42 begrenzt, die jeweils von außen von einer Druckplatte 43 bzw. 44 begrenzt wird. Dieser Batterieblock 10 wird, wie in den Fig. 7 und 8 dargestellt, von vier Anpressstäben 53 mit entsprechender Ummantelung 54 aneinander gepresst. Dazu sind beispielsweise die Anpressstäbe 53 an ihren Endbereichen mit einem Gewinde versehen, die das Aufsetzen einer Mutter 58 und ein Verspannen der Anpressstäbe 53 ermöglicht, so dass ein entsprechender Druck auf die Batteriepacks 10a-10e ausgeübt wird und somit eine sichere elektrische Verbindung zwischen den einzelnen Anschlussstrukturen 14 ermöglicht wird. Die Anschlussbereiche 45 und 46 der Kontaktplatten 41, 42 stehen jeweils über die Außenabmessungen des Batteriepacks 10a, 10e und der Druckplatten 43, 44 hervor oder ragen nach oben hervor.

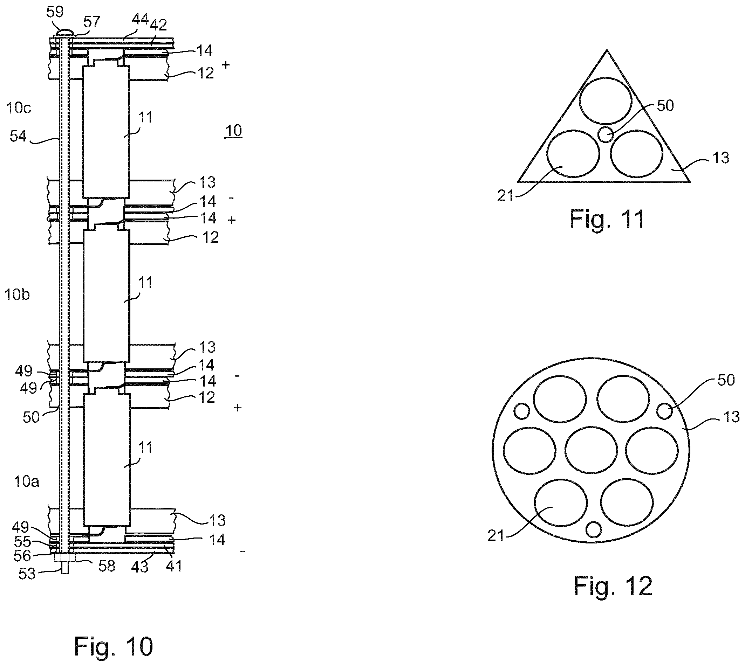

In Fig. 10 ist eine Schnittdarstellung durch einen erfindungsgemäßen Batterieblock dargestellt. Es sind hier drei verschiedene Batteriepacks 10a, 10b, 10c aneinander gesetzt, die in der Schnittdarstellung gemäß Fig. 10 von einem Anpressstab 53 aneinander gepresst werden. An den Ober- bzw. Unterseiten des oberen bzw. unteren Batteriepacks 10a, 10c sind entsprechende Kontaktplatten 41 und 42 und entsprechende Druckplatten 43 und 44 angeordnet.

Die Fig. 11 und 12 zeigen alternative Formen von Haltestrukturen. In Fig. 11 ist beispielsweise eine dreieckige Form einer Haltestruktur 13 dargestellt. Wie aus Fig. 11 ersichtlich ist, ist es möglich, eine derartige Anordnung mit nur einem Anpressstab auszubilden. Bei einer derartigen Ausgestaltung der Haltestruktur 13 weisen die Anschlussstrukturen 14 vorzugsweise eine entsprechende Form auf, die jedoch von ihren Außenabmessungen etwas kleiner ist, so dass die Anschlussstrukturen 14 nicht über den äußeren Rand der Haltestruktur 13 hervorstehen und somit einen elektrischen Kontakt einer Anschlussstruktur 14 mit anderen elektrisch leitenden Materialien zu verhindern. Diese Haltestruktur 13 enthält 3 Aufnahmeöffnungen 21 zur Aufnahme von Batteriezellen 11 und eine Durchgangsöffnung 50 zur Aufnahme eines Anpresstabes.

Alternativ zu Fig. 11 ist in Fig. 12 eine kreisrunde Haltestruktur 13 dargestellt, die sieben Aufnahmeöffnungen 21 darstellt, in die sieben Batteriezellen 11 eingesetzt werden können. Vorzugsweise wird eine derartige Haltestruktur 13 von drei Anpressstäben zusammengehalten, die durch die drei Durchgangsöffnungen 50 hindurchgeführt werden. Auch hier würden die Anschlussstrukturen 14 eine kreisrunde Struktur aufweisen, die jedoch von ihrem Durchmesser geringer wäre als der Durchmesser der entsprechenden Haltestruktur 13.

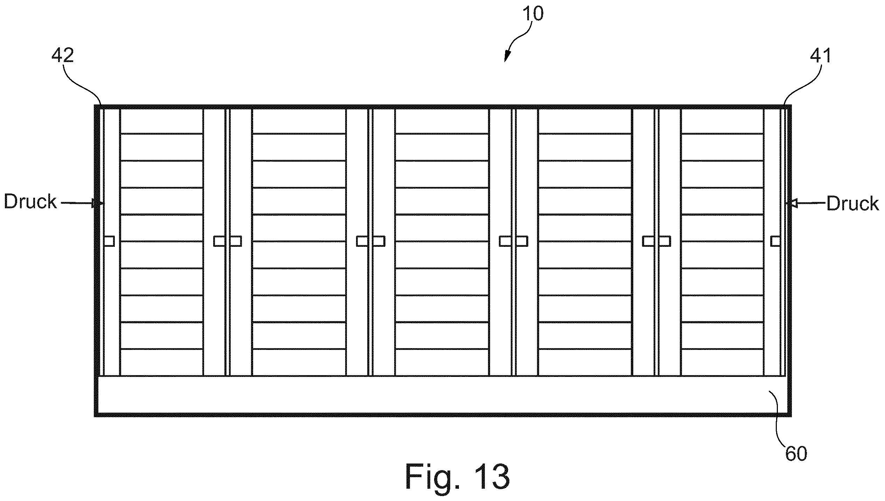

In Fig. 13 ist eine alternative Ausgestaltung eines Batterieblocks dargestellt. Alternativ zu der Verwendung von Anpressstäben 53 mit ihrer Ummantelung 54 ist es auch möglich, in vorgefertigten bzw. vordefinierten Gehäusen 60 mehrere Batteriepacks 10a-10e anzuordnen, wobei die äußere Form des Gehäuses 60 den entsprechenden Anpressdruck zwischen den einzelnen Batteriepacks 10a - 10e realisiert, so dass die Verwendung von zusätzlichen Anpressstäben 53 nicht erforderlich ist.

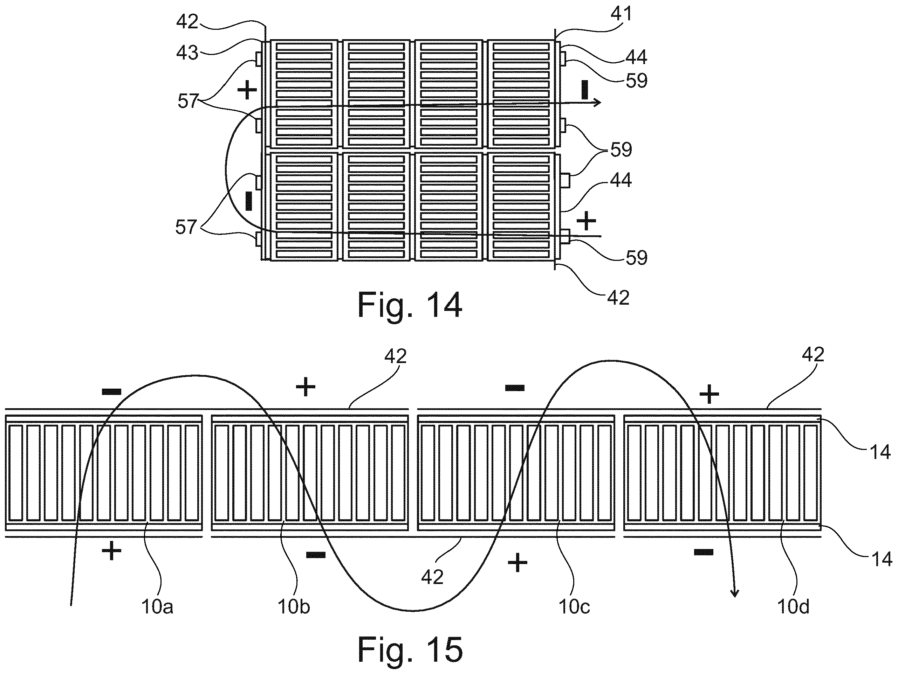

In Fig. 14 ist ein Verschalten von zwei Batterieblocks 10 dargestellt. Dabei sind jeweils vier Batteriepacks 10a - 10d pro Batterieblock 10 hintereinander geschaltet. Über eine Kontaktplatte 42 wird es ermöglicht, auf den unteren Batterieblock 10 einen oberen Batterieblock 10 aufzusetzen, wobei hier der Minuspol des unteren Batterieblocks 10 mit dem Pluspol des oberen Batterieblocks über eine gemeinsame Kontaktplatte 42 verbunden wird. An der rechten Seite des oberen Batterieblocks 10 befindet sich der negative Anschluss des oberen Batterieblocks 10. Somit ist es möglich, eine entsprechende Stapelung von verschiedenen Batterieblocks 10 auf extrem reduziertem Volumen zu ermöglichen.

Eine alternative Anordnung von Batteriepacks 10a bis 10d ist in Fig. 15 dargestellt. Hier werden erfindungsgemäße Batteriepacks 10a bis 10d nebeneinander angeordnet, so dass die Anschlussstrukturen 14 von benachbarten Batteriepacks 10a, 10b mit einer gemeinsamen Kontaktplatte 42 miteinander verbunden werden können und somit eine größtmögliche Kontaktfläche zu erreichen und einen optimalen Stromfluss zu gewährleisten.

Somit wird hier ein Batterieblock angegeben, der mehrere Batteriepacks aufweist, wobei die elektrisch positiven und elektrisch negativen Anschlusskontakte der Batteriezellen eines Batteriepacks auf gegenüberliegenden Seiten des Batteriepacks angeordnet sind und auf jeder der beiden Seiten eine elektrisch leitfähige Anschlussstruktur vorhanden ist, die mit den jeweiligen elektrischen Anschlusskontakten der Batteriezellen eines Batteriepacks verbunden ist, wobei zwei benachbarte Batteriepacks jeweils so angeordnet sind, dass die elektrischen Anschlusskontakte der Zellen von benachbarten Batteriepacks, die zu einer Seite ausgerichtet sind, elektrisch entgegengesetzt gepolt sind, wobei sich auf einer Seite des Batterieblocks eine gemeinsame Kontaktplatte über die Anschlussstrukturen der benachbarten Batteriepacks erstreckt und die elektrisch entgegengesetzt gepolten Anschlussstrukturen miteinander in Reihe schaltet.

Die Merkmale die in Zusammenhang mit den obigen Ausführungsbeispielen beschrieben sind, lassen sich auch auf dieses Ausführungsbeispiel übertragen. Somit kann auch ein Batterieblock, bei dem die einzelnen Batteriepacks neben einander angeordnet sind, d.h bei denen die Längsachsen der Batteriezellen 11 von benachbarten Batteriepacks 10a, 10b parallel zueinander liegen, Haltestrukturen 12, 13, Druckplatten 43, 44, Anpressvorrichtungen 53 etc. aufweisen.

Ein besonderer Vorteil der oben beschriebenen Ausführungsbeispiel liegt darin, das durch die großflächigen Anschlussstrukturen und Kontaktplatten ein optimaler Stromfluss erreicht wird, der nicht durch zusätzliche elektrische Verbindungen oder Querschnittsverjüngungen beeinträchtigt wird.

## Patentansprüche

1. Batterieblock (10) umfassend:
- wenigstens zwei Batteriepacks (10a, 10b, 10c, 10d, lOe),
- wobei jedes Batteriepack wenigstens zwei Batteriezellen (11) umfasst, die jeweils als Rundzellen ausgebildet sind,
- wobei alle elektrisch positiven Anschlusskontakte (33) der Batteriezellen (11) des Batteriepacks auf einer ersten Seite liegen und alle elektrisch negativen Anschlusskontakte (34) der Batteriezellen (11) auf der gegenüberliegenden Seite des Batteriepacks angeordnet sind,
- wobei jeder elektrischen Anschlussseite eines Batteriepacks eine Anschlussstruktur (14) zugeordnet ist,
- wobei die elektrisch entgegensetzt gepolten Anschlussstrukturen (14) von zwei benachbarten Batteriepacks (10a, 10b) vollflächig aneinander liegen, um eine großflächige Verbindung zwischen den Batteriepacks (10a, 10b) zu erzielen,
**gekennzeichnet dadurch, dass** die elektrisch positiven Anschlusskontakte (33) der Batteriezellen (11) mit jeweils einem Anschlusselement (15) an einer ersten Anschlussstruktur (14) des Batteriepacks elektrisch verbunden sind und die elektrisch negativen Anschlusskontakte (34) der Batteriezellen (11) mit jeweils einem Anschlusselement (15) an einer zweiten Anschlussstruktur (14) elektrisch verbunden sind,
wobei die Anschlusselemente (15) jeweils an einer Seite der Anschlussstrukturen (14) befestigt sind, die den Batteriezellen (11) zugewandt ist, wobei die Anschlusselemente (15) streifenförmig ausgebildet und an den Anschlusskontakten der Batteriezellen befestigt sind, wobei die Anschlusselemente (15) mittels eines Fügeverfahrens an der Anschlussstruktur (14) befestigt sind.

2. Batterieblock nach Anspruch 1, wobei die Batteriepacks (10a, 10b, 10c, 10d, 10e) in Serie geschaltet sind und elektrisch entgegengesetzte Anschlusskontakte der Batteriezellen (11) an den gegenüberliegenden außenliegenden Seiten des Batterieblocks (10) angeordnet sind.

3. Batterieblock nach Anspruch 1 oder 2, wobei die Batteriepacks (10a, 10b, 10c, 10d, 10e) des Batterieblocks durch Druck auf die außenliegenden Batteriepacks (10a, 10b, 10c, 10d, 10e) aneinander gepresst sind und zum Aneinanderpressen der Batteriepacks (10a, 10b, 10c, 10d, 10e) wenigstens eine Anpressvorrichtung vorgesehen ist.

4. Batterieblock nach Anspruch 3, wobei die wenigstens eine Anpressvorrichtung als Anpressstab (53) ausgebildet ist und Befestigungsmittel (57, 58, 59) zur Befestigung an dem wenigstens einen Anpressstab (53) angeordnet sind, mit denen die wenigstens zwei Batteriepacks aneinander pressbar sind.

5. Batterieblock nach Anspruch 4, wobei die Anschlussstrukturen (14) des Batteriepacks jeweils wenigstens eine Durchgangsöffnung (49) zur Aufnahme des wenigstens einen Anpressstabs (53) aufweisen.

6. Batterieblock nach einem der vorherigen Ansprüche, wobei jeder der beiden außenliegenden Anschlussstrukturen (14) der aneinander liegenden Batteriepacks jeweils eine Kontaktplatte (41, 42) zugeordnet ist, die jeweils einen Anschlussbereich (45, 46) zum Anschluss des Batterieblocks an ein Ladegerät oder an einen elektrischen Verbraucher aufweisen.

7. Batterieblock nach einem der vorherigen Ansprüche, wobei an den beiden Außenseiten des Batteriepacks jeweils eine elektrisch isolierende Druckplatte (43, 44) angeordnet ist.

8. Batterieblock nach einem der vorherigen Ansprüche, wobei eine erste Haltestruktur (12) auf der Seite der positiven elektrischen Anschlusskontakte (33) der Batteriezellen (11) und eine zweite Haltestruktur (13) auf der Seite der negativen elektrischen Anschlusskontakte (34) der Batteriezellen (11) zur Aufnahme der wenigstens zwei Batteriezellen (11) angeordnet ist, wobei die Haltestruktur (12, 13) eine Fläche (24) aufweist, auf der die Anschlussstruktur (14) aufliegt, wobei die Haltestruktur (12, 13) Anschlussöffnungen (21) und wenigstens eine Durchgangsöffnung (50) aufweist.

9. Batterieblock nach Anspruch 8, wobei die Durchgangsöffnung (50) in der Haltestruktur (12, 13) einen kleineren Durchmesser aufweist als die Durchgangsöffnung (49) der Anschlussstrukturen (14).

10. Batterieblock nach einem der vorherigen Ansprüche, wobei die Anschlussstruktur (14) eine Fläche aufweist, die wenigstens der Summe der Querschnitte der im Batteriepack enthaltenen Batteriezellen (11) entspricht.

11. Batterieblock nach einem der vorherigen Ansprüche, wobei die Länge einer Anschlussstruktur (14) in einer Längsrichtung größer ist als die Summe der Einzeldurchmesser der Batteriezellen in diese Längsrichtung.

12. Batterieblock nach einem der vorherigen Ansprüche, wobei die Breite einer Anschlussstruktur (14) in eine Breitenrichtung größer ist als die Summe der Einzelbreiten oder Einzeldurchmesser der Batteriezellen (11) in diese Breitenrichtung.

13. Verfahren zum Herstellen eines Batterieblocks, umfassend die Schritte:
- Bereitstellen von wenigstens zwei Batteriepacks (10a, 10b, 10c, 10d, lOe), wobei jedes Batteriepack wenigstens zwei Batteriezellen (11) umfasst, die jeweils als Rundzellen ausgebildet sind, und alle elektrisch positiven Anschlusskontakte (33) der Batteriezellen (11) des Batteriepacks auf einer ersten Seite liegen und alle elektrisch negativen Anschlusskontakte (34) der Batteriezellen (11) auf der gegenüberliegenden Seite des Batteriepacks angeordnet sind und jeder elektrischen Anschlussseite eines Batteriepacks eine Anschlussstruktur (14) zugeordnet ist, wobei die elektrisch positiven Anschlusskontakte (33) der Batteriezellen (11) mit jeweils einem Anschlusselement (15) an einer ersten Anschlussstruktur (14) des Batteriepacks elektrisch verbunden sind und die elektrisch negativen Anschlusskontakte (34) der Batteriezellen (11) mit jeweils einem Anschlusselement (15) an einer zweiten Anschlussstruktur (14) elektrisch verbunden sind, wobei die Anschlusselemente (15) jeweils an einer Seite der Anschlussstrukturen (14) befestigt sind, die den Batteriezellen (11) zugewandt ist, und die Anschlusselemente (15) streifenförmig ausgebildet und an den Anschlusskontakten der Batteriezellen befestigt sind, wobei die Anschlusselemente (15) mittels eines Fügeverfahrens an der Anschlussstruktur (14) befestigt sind; und
- Aneinanderpressen von benachbarten Batteriepacks (10a, 10b), so dass die elektrisch entgegensetzt gepolten Anschlussstrukturen (14) der zwei benachbarten Batteriepacks (10a, 10b) vollflächig aneinander liegen, um eine großflächige Verbindung zwischen den Batteriepacks (10a, 10b) zu erzielen.

## Claims

1. A battery block (10) comprising:
- at least two battery packs (10a, 10b, 10c, 10d, 10e),
- wherein each battery pack includes at least two battery cells (11), each designed as a round cell,
- wherein all electrically positive terminal contacts (33) of the battery cells (11) of the battery pack are situated on a first side, and all electrically negative terminal contacts (34) of the battery cells (11) are situated on the opposite side, of the battery pack,
- wherein a connection structure (14) is associated with each electrical connection side of a battery pack,
- wherein the connection structures (14), having opposite electrical polarities, of two neighboring battery packs (10a, 10b) contact one another over the entire surface in order to achieve a connection between the battery packs (10a, 10b) over a large surface area,
**characterized in that**
the electrically positive terminal contacts (33) of the battery cells (11) are electrically connected to a first connection structure (14) of the battery pack via a connection element (15) in each case, and the electrically negative terminal contacts (34) of the battery cells (11) are electrically connected to a connection element (15) at a second connection structure (14) in each case,
wherein the connection elements (15) are each fastened to a side of the connection structures (14) facing the battery cells (11), wherein the connection elements (15) have a strip-shaped design and are fastened to the terminal contacts of the battery cells, wherein the connection elements (15) are affixed to the connection structure (14) by means of a joining process.

2. The battery block according to Claim 1, wherein the battery packs (10a, 10b, 10c, 10d, 10e) are connected in series, and electrically opposite terminal contacts of the battery cells (11) are situated at the opposite outer sides of the battery block (10).

3. The battery block according to Claim 1 or 2, wherein the battery packs (10a, 10b, 10c, 10d, 10e) of the battery block are pressed against one another by pressure on the outer battery packs (10a, 10b, 10c, 10d, 10e), and at least one pressing device is provided for pressing the battery packs (10a, 10b, 10c, 10d, 10e) against one another.

4. The battery block according to Claim 3, wherein the at least one pressing device is designed as a pressing rod (53), and fastening means (57, 58, 59) for fastening, by means of which the at least two battery packs are pressable against one another, are situated on the at least one pressing rod (53).

5. The battery block according to Claim 4, wherein the connection structures (14) of the battery pack each have at least one through opening (49) for receiving the at least one pressing rod (53).

6. The battery block according to one of the preceding claims, wherein a contact plate (41, 42) is associated with each of the two outer connection structures (14) of the adjacently situated battery packs, each contact plate having a connection area (45, 46) for connecting the battery block to a charging device or to an electrical consumer.

7. The battery block according to one of the preceding claims, wherein an electrically insulating pressure plate (43, 44) is situated at each of the two outer sides of the battery pack.

8. The battery block according to one of the preceding claims, wherein for accommodating the at least two battery cells (11), a first retaining structure (12) is situated on the side of the positive electrical terminal contacts (33) of the battery cells (11), and a second retaining structure (13) is situated on the side of the negative electrical terminal contacts (34) of the battery cells (11), wherein the retaining structure (12, 13) has a surface (24) on which the connection structure (14) rests, wherein the retaining structure (12, 13) has connection openings (21) and at least one through opening (50).

9. The battery block according to Claim 8, wherein the through opening (50) in the retaining structure (12, 13) has a smaller diameter than the through opening (49) in the connection structures (14).

10. The battery block according to one of the preceding claims, wherein the connection structure (14) has a surface that corresponds to at least the sum of the cross sections of the battery cells (11) contained in the battery pack.

11. The battery block according to one of the preceding claims, wherein the length of a connection structure (14) in a longitudinal direction is greater than the sum of the individual diameters of the battery cells in this longitudinal direction.

12. The battery block according to one of the preceding claims, wherein the width of a connection structure (14) in a width direction is greater than the sum of the individual widths or individual diameters of the battery cells (11) in this width direction.

13. A method for manufacturing a battery block, comprising the steps of:
- providing at least two battery packs (10a, 10b, 10c, 10d, lOe), wherein each battery pack comprises at least two battery cells (11), each designed as a round cell, and all electrically positive terminal contacts (33) of the battery cells (11) of the battery pack are situated on a first side, and all electrically negative terminal contacts (34) of the battery cells (11) are situated on the opposite side, of the battery pack, and a connection structure (14) is associated with each electrical connection side of a battery pack, wherein the electrically positive terminal contacts (33) of the battery cells (11) are electrically connected to a first connection structure (14) of the battery pack at a connection element (15) in each case, and the electrically negative terminal contacts (34) of the battery cells (11) are electrically connected to a connection element (15) at a second connection structure (14) in each case, wherein the connection elements (15) are each fastened to a side of the connection structures (14) facing the battery cells (11), and the connection elements (15) have a strip-shaped design and are fastened to the terminal contacts of the battery cells, wherein the connection elements (15) are affixed to the connection structure (14) by means of a joining process; and
- pressing neighboring battery packs (10a, 10b) so that the connection structures (14), having opposite electrical polarities, of the two neighboring battery packs (10a, 10b) contact one another over the entire surface in order to achieve a connection between the battery packs (10a, 10b) over a large surface area.

## Revendications

1. Bloc-batterie (10) incluant :
- au moins deux paquets de batteries (10a, 10b, 10c, 10d, 10e),
- dans lequel chaque paquet de batteries inclut au moins deux cellules de batterie (11), qui sont réalisées chacune sous forme de cellules rondes,
- dans lequel tous les contacts de connexion électrique positifs (33) des cellules de batterie (11) du paquet de batteries sont situés sur un premier côté et tous les contacts de connexion électrique négatifs (34) des cellules de batterie (11) sont agencés sur le côté opposé du paquet de batteries,
- dans lequel une structure de connexion (14) est associée à chaque côté de connexion électrique d'un paquet de batteries,
- dans lequel les structures de connexion (14) de polarité électrique opposée de deux paquets de batteries voisins (10a, 10b) sont appliquées l'une contre l'autre sur toute la surface, afin d'atteindre une liaison à grande surface entre les paquets de batteries (10a, 10b),
**caractérisé en ce que**
les contacts de connexion électrique positifs (33) des cellules de batterie (11) sont reliés électriquement respectivement à un élément de connexion (15) sur une première structure de connexion (14) du paquet de batteries, et les contacts de connexion électrique négatifs (34) des cellules de batterie (11) sont reliés électriquement respectivement à un élément de connexion (15) sur une seconde structure de connexion (14),
dans lequel les éléments de connexion (15) sont fixés respectivement sur un côté des structures de connexion (14) qui est tourné vers les cellules de batterie (11),
dans lequel les éléments de connexion (15) sont réalisés en forme de ruban et sont fixés sur les contacts de connexion des cellules de batterie, et les éléments de connexion (15) sont fixés sur la structure de connexion (14) au moyen d'un processus d'assemblage.

2. Bloc-batterie selon la revendication 1, dans lequel les paquets de batteries (10a, 10b, 10c, 10d, 10e) sont branchés en série et des contacts de connexion électriquement opposés des cellules de batterie (11) sont agencés sur les côtés extérieurs opposés du bloc de batterie (10).

3. Bloc-batterie selon la revendication 1 ou 2, dans lequel les paquets de batteries (10a, 10b, 10c, 10d, 10e) du bloc-batterie sont pressés les uns contre les autres en exerçant une pression sur les paquets de batteries (10a, 10b, 10c, 10d, 10e) extérieurs, et il est prévu au moins un dispositif de pressage destiné à presser les paquets de batteries (10a, 10b, 10c, 10d, 10e) les uns contre les autres.

4. Bloc-batterie selon la revendication 3, dans lequel ledit au moins un dispositif de pressage est réalisé sous forme de barreau de pressage (53), et des moyens de fixation (57, 58, 59) destinés à la fixation sont agencés sur ledit au moins un barreau de pressage (53), au moyen desquels lesdits au moins deux paquets de batteries peuvent être pressés l'un contre l'autre.

5. Bloc-batterie selon la revendication 4, dans lequel les structures de connexion (14) du paquet de batteries comprennent respectivement au moins une ouverture traversante (49) pour la réception dudit au moins un barreau de pressage (53).

6. Bloc-batterie selon l'une des revendications précédentes, dans lequel une plaque de contact (41, 42) respective est associée à chacune des deux structures de connexion extérieures (14) des paquets de batteries appliqués l'un contre l'autre, lesdites plaques de contact comportent chacune une zone de connexion (45, 46) pour la connexion du bloc-batterie à un appareil de charge ou à un dispositif de consommation électrique.

7. Bloc-batterie selon l'une des revendications précédentes, dans lequel une plaque de pression électriquement isolante (43, 44) est agencée respectivement sur les deux côtés extérieurs du paquet de batteries.

8. Bloc-batterie selon l'une des revendications précédentes, dans lequel une première structure de maintien (12) est agencée sur le côté des contacts de connexion électrique positifs (33) des cellules de batterie (11) et une seconde structure de maintien (13) est agencée sur le côté des contacts de connexion électrique négatifs (34) des cellules de batterie (11) pour la réception desdites au moins deux cellules de batterie (11), ladite structure de maintien (12, 13) présentant une surface (24) sur laquelle s'applique la structure de connexion (14), et la structure de maintien (12, 13) présente des ouvertures de connexion (21) et au moins une ouverture traversante (50).

9. Bloc-batterie selon la revendication 8, dans lequel l'ouverture traversante (50) dans la structure de maintien (12, 13) a un diamètre plus petit que l'ouverture traversante (49) des structures de connexion (14).

10. Bloc-batterie selon l'une des revendications précédentes, dans lequel la structure de connexion (14) a une surface qui correspond au moins à la somme des sections transversales des cellules de batterie (11) contenues dans le paquet de batteries.

11. Bloc-batterie selon l'une des revendications précédentes, dans lequel la longueur d'une structure de connexion (14), dans une direction longitudinale, est plus grande que la somme des diamètres individuels des cellules de batterie dans cette direction longitudinale.

12. Bloc-batterie selon l'une des revendications précédentes, dans lequel la largeur d'une structure de connexion (14), dans une direction en largeur, est plus grande que la somme des largeurs individuelles ou des diamètres individuels des cellules de batterie (11) dans cette direction en largeur.

13. Procédé pour la réalisation d'un bloc-batterie, incluant les étapes consistant à :
- fournir au moins deux paquets de batteries (10a, 10b, 10c, 10d, 10e), dans lesquels chaque paquet de batteries inclut au moins deux cellules de batterie (11), lesquelles sont réalisées respectivement comme des cellules rondes, et tous les contacts de connexion électrique positifs (33) des cellules de batterie (11) du paquet de batteries sont situés sur un premier côté et tous les contacts de connexion électrique négatifs (34) des cellules de batterie (11) sont agencés sur le côté opposé du paquet de batteries, et une structure de connexion (14) est associée à chaque côté de connexion électrique d'un paquet de batteries, dans lequel les contacts de connexion électrique positifs (33) des cellules de batterie (11) sont reliés électriquement à un élément de connexion respectif (15) sur une première structure de connexion (14) du paquet de batteries, et les contacts de connexion électrique négatifs (34) des cellules de batterie (11) sont reliés électriquement à un élément de connexion respectif (15) au niveau d'une seconde structure de connexion (14), dans lequel les éléments de connexion (15) sont fixés respectivement sur un côté des structures de connexion (14) qui est tourné vers les cellules de batterie (11), et les éléments de connexion (15) sont réalisés sous forme de ruban et sont fixés sur les contacts de connexion des cellules de batterie, et les éléments de connexion (15) sont fixés sur la structure de connexion (14) au moyen d'une procédure d'assemblage ; et
- presser les uns contre les autres des paquets de batteries voisins (10a, 10b), de telle sorte que les structures de connexion (14) de polarité électrique opposée des deux paquets de batteries voisins (10a, 10b) sont appliquées l'une contre l'autre sur une grande surface, afin d'obtenir une liaison à grande surface entre les paquets de batteries (10a, 10b).
